# EUROPÄISCHE PATENTANMELDUNG

(11) **EP 4 446 106 A1**
(43) Veröffentlichungstag der Anmeldung: **16.10.2024**
(21) Anmeldenummer: 24165982.0
(22) Anmeldetag: 25.03.2024
(51) Int. Cl.: B31B 70/36, B31B 70/26, B31B 70/62, B31B 70/64, B31B 70/88, B31B 155/00, B41F 13/58, B29C 63/42, B65C 3/06

(54) **VORRICHTUNG UND VERFAHREN ZUR SCHLAUCHBILDUNG**

(30) Priorität: 12.04.2023 DE 102023109230
(71) Anmelder: manroland Goss web systems GmbH, 86153 Augsburg (DE)
(72) Erfinder: Mayr, Robert, 86356 Neusäß (DE)

(57) **Zusammenfassung**

Die Erfindung betrifft eine Einschlagvorrichtung (1) zum mindestens einseitigen Einschlagen einer in einer Einlaufrichtung E einlaufenden Substratbahn (6) umfassend mindestens eine erste Einlaufwendestange (2-1) und mindestens eine erste Auslaufwendestange (3-1).

Der Erfindung liegt die Aufgabe zugrunde, eine Lösung zu schaffen, bei welcher auf scharfkantige Falzeinrichtungen verzichtet wird und ein Umschlagen einer Substratbahn (6) mittels gerundeter Oberflächen erreicht wird.

Diese Aufgabe wird dadurch gelöst, dass die erste Auslaufwendestange (3-1) eine Austrittsebene A der auslaufenden eingeschlagenen Substratbahn (6) beschreibt und einen Winkel ϕ zu einer Mittelebene M beschreibt, wobei die Mittelebene M senkrecht zur Austrittsebene A steht und parallel zur Einlaufrichtung E ausgerichtet ist, und wobei die erste Einlaufwendestange (2-1) in Projektion auf die Mittelebene M einen Winkel α zur Austrittsebene A einschließt, und wobei die erste Einlaufwendestange (2-1) senkrecht zu der Mittelebene M einen Winkel β zur Austrittsebene A einschließt, und wobei die erste Einlaufwendestange (2-1) in Projektion auf die Austrittsebene A einen Winkel δ zur Mittelebene M einschließt, und wobei die Substratbahn (6) mit dem einzuschlagenden Bereich über die erste Einlaufwendestange (2-1) führbar ist, und wobei die Substratbahn (6) derart an der ersten Auslaufwendestange (3-1) entlang leitbar ist, dass die eingeschlagene Seite der Substratbahn (6) der ersten Auslaufwendestange (3-1) zugewandt ist.

## Beschreibung

Die Erfindung betrifft eine Einschlagvorrichtung zum mindestens einseitigen Einschlagen einer in einer Einlaufrichtung E einlaufenden Substratbahn mit einer Bahnbreite b umfassend mindestens eine erste Einlaufwendestange und mindestens eine erste Auslaufwendestange.

Im Verpackungsbereich sind Lösungen bekannt, bei denen aus einer bedruckten oder unbedruckten Substratbahn schlauchförmige Gebilde aus einem Substrat hergestellt werden, beispielsweise als Ausgangsmaterial zur Herstellung von Beuteln oder ähnlichen Behältnissen.

Derartige schlauchförmige Produkte haben in den letzten Jahren auch Bedeutung für das Verzieren und/oder Beschriften von dreidimensionalen Verpackungen wie beispielsweise Becher oder Flaschen gewonnen. Hierzu wird eine Bahn aus einer sogenannten Schrumpffolie zunächst bedruckt, um aus der bedruckten Substratbahn einen Schlauch beziehungsweise ein schlauchförmiges Gebilde aus der einfach oder mehrfach eingeschlagenen Substratbahn zu fertigen. Dieser Schlauch wird anschließend quergeschnitten und in einzelne Schlauchstücke vereinzelt, welche über nahezu alle beliebig geformten dreidimensionalen Behältnisse gesteckt werden können und im Bedarfsfälle erhitzt werden, so dass sich das Schlauchstück der Kontur des Behältnisses anpasst, so dass durch diese Vorgehensweise ein kompliziertes und aufwändiges Bedrucken beliebig geformter Behältnisse vermieden wird.

Für die Herstellung derartiger bedruckter Schlauchstücke oder Schrumpfhülsen ist es erforderlich, eine zumeist bedruckte Substratbahn zu einem Schlauch oder zu einem schlauchförmigen Gebilde zu formen, was in der Regel durch Einschlagen der seitlichen Bahnränder erfolgt.

Aus dem Stand der Technik sind hierzu zumeist Lösungen bekannt, bei welcher die Substratbahn mittels mindestens einer Pflugfalzeinrichtung oder mittels Leitblechen oder Falzblechen zu einem Schlauch eingeschlagen wird.

Bei derartigen aus dem Stand der Technik bekannten Vorrichtungen zum Bilden eines Schlauches aus einer Substratbahn besteht somit aufgrund der eingesetzten Einschlagvorrichtungen wie Pflugfalzen oder Falzblechen die Gefahr der Beschädigung der Substratbahn oder des darauf aufgedruckten Druckbildes durch die Kanten der Falzeinrichtungen.

Der Erfindung liegt daher die Aufgabe zugrunde, eine Lösung zu schaffen, bei welcher auf derartige verhältnismäßig scharfkantige Falzeinrichtungen verzichtet wird und ein Umschlagen mindestens eines Bereiches einer Substratbahn mittels gerundeter Oberflächen erreicht wird, um somit die Gefahr einer Beschädigung der Substratbahn und/oder des auf die Substratbahn aufgedruckten Druckbildes zu vermeiden.

Diese Aufgabe wird erfindungsgemäß dadurch gelöst, dass die erste Auslaufwendestange eine Austrittsebene A der auslaufenden eingeschlagenen Substratbahn beschreibt und einen Winkel ϕ zu einer Mittelebene M beschreibt, wobei die Mittelebene M senkrecht zur Austrittsebene A steht und parallel zur Einlaufrichtung E ausgerichtet ist, und wobei die erste Einlaufwendestange in Projektion auf die Mittelebene M einen Winkel α zur Austrittsebene A einschließt, und wobei die erste Einlaufwendestange senkrecht zu der Mittelebene M einen Winkel β zur Austrittsebene A einschließt, und wobei die erste Einlaufwendestange in Projektion auf die Austrittsebene A einen Winkel δ zur Mittelebene M einschließt, und wobei die Substratbahn mit dem einzuschlagenden Bereich über die erste Einlaufwendestange führbar ist, und wobei die Substratbahn derart an der ersten Auslaufwendestange entlang leitbar ist, dass die eingeschlagene Seite der Substratbahn der ersten Auslaufwendestange zugewandt ist.

Eine derartige Vorrichtung weist den Vorteil auf, dass die Substratbahn während des Einschlagens dieser zur Bildung eines Schlauches ausschließlich in Kontakt mit runden, vorzugsweise blasluftumspülten Wendestangen ist, so dass einerseits ein Kontakt der Substratbahn mit Kanten sogenannter Falz- oder Leitbleche vermieden wird, und dass andererseits auch eine sehr geringe Reibung zwischen der Substratbahn und den eingesetzten Wendestangen sichergestellt ist, was geringe Bahnspannungen ermöglicht und die Reibung auf das aufgedruckte Druckbild vermindert, so dass das Risiko von Beschädigungen der Substratbahn und/oder des Druckbildes weitestgehend ausgeschlossen werden kann.

Gemäß einer Ausgestaltung der Erfindung umfasst die Einschlagvorrichtung eine zweite Einlaufwendestange und eine zweite Auslaufwendestange, wobei die zweite Einlaufwendestange spiegelbildlich gegenüber der Mittelebene M zur ersten Einlaufwendestange angeordnet und von der ersten Einlaufwendestange in einem Abstand a in Erstreckung der Bahnbreite b beabstandet ist, und wobei die zweite Auslaufwendestange im Wesentlichen spiegelbildlich gegenüber der Mittelebene M zur ersten Auslaufwendestange angeordnet ist.

Diese Ausgestaltung weist den Vorteil auf, dass die Substratbahn damit auf beiden Seiten eingeschlagen werden kann, so dass ein Schlauch mit einem Stoß der beiden eingeschlagenen Ränder der Substratbahn, welche auf dem nicht eingeschlagenen Teil der Substratbahn aufliegen, gebildet werden kann.

Gemäß einer weiteren Ausgestaltung der Erfindung ist die erste Einlaufwendestange und/oder die zweite Einlaufwendestange in Erstreckung der Austrittsebene A verstellbar. Diese Ausgestaltung weist den Vorteil auf, dass damit die Einschlagvorrichtung auf unterschiedliche Bahnbreiten b der Substratban eingestellt werden kann, so dass ein variabler Betrieb möglich ist.

Gemäß einer weiteren Ausgestaltung der Erfindung erfolgt die Verstellung der ersten Einlaufwendestange und/oder der zweiten Einlaufwendestange in Erstreckung der Bahnbreite b zur Veränderung des Abstandes a.

Mit dieser Ausgestaltung ist es somit möglich, sowohl unterschiedliche Breiten der eingeschlagenen, zu einem Schlauch geformten Substratbahn als auch unterschiedliche Überlappungen der eingeschlagenen Ränder der Substratbahn auszuführen.

Gemäß einer weiteren Ausgestaltung der Erfindung überragt die erste Auslaufwendestange in Erstreckung der Bahnbreite b die zweite Auslaufwendestange, oder dass die zweite Auslaufwendestange in Erstreckung der Bahnbreite b die erste Auslaufwendestange überragt. Diese Ausgestaltung weist den Vorteil auf, dass damit ein eingeschlagener Teil der Substratbahn den anderen eingeschlagenen Teil der Substratbahn überragt, so dass hierdurch eine ausreichende Überlappung für ein formschlüssiges oder stoffschlüssiges Fügen der eingeschlagenen Bereiche der Substratbahn möglich ist.

Gemäß einer weiteren Ausgestaltung der Erfindung ist an der ersten Auslaufwendestange oder an der zweiten Auslaufwendestange und/oder stromabwärts und/ oder stromaufwärts der ersten Auslaufwendestange oder stromabwärts und/oder stromaufwärts der zweiten Auslaufwendestange eine Fügeeinrichtung angeordnet.

Mittels einer derartigen Fügeeinrichtung, welche beispielsweise als Längsklebeeinrichtung oder als Schweißeinrichtung oder als Verkettelungseinrichtung ausgeführt sein kann, lässt sich der eingeschlagene Teil der Substratbahn mit der restlichen Substratbahn verbinden, so dass ein geschlossener Schlauch oder Sleeve gebildet wird, welcher für die weitere Verwendung entsprechend weiterverarbeitet werden kann, wie beispielsweise wieder aufgerollt oder in einzelne Schlauchstücke vereinzelt werden kann.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: Eine Seitenansicht einer Einschlagvorrichtung mit einer ersten Einlaufwendestange und einer ersten Auslaufwendestange
- Fig. 2: Eine Draufsicht einer Einschlagvorrichtung mit einer ersten Einlaufwendestange und einer ersten Auslaufwendestange
- Fig. 3: Eine Vorderansicht einer Einschlagvorrichtung mit einer ersten Einlaufwendestange und einer ersten Auslaufwendestange
- Fig. 4: Eine Schnittdarstellung einer mittels der in den Fig. 1 bis 3 dargestellten Einschlagvorrichtung eingeschlagenen Substratbahn
- Fig. 5: Eine dreidimensionale Ansicht einer Einschlagvorrichtung mit zwei Einlaufwendestangen und zwei Auslaufwendestangen
- Fig. 6: Eine Schnittdarstellung einer mittels der in Fig. 5 dargestellten Einschlagvorrichtung eingeschlagenen Substratbahn
- Fig. 7: Eine Seitenansicht einer Einschlagvorrichtung mit zwei Einlaufwendestangen und zwei Auslaufwendestangen
- Fig. 8: Eine Draufsicht einer Einschlagvorrichtung mit zwei Einlaufwendestangen und zwei Auslaufwendestangen
- Fig. 9: Eine Vorderansicht einer Einschlagvorrichtung mit zwei Einlaufwendestangen und zwei Auslaufwendestangen
- Fig. 10: Eine Schnittdarstellung einer Einschlagvorrichtung mit zwei Einlaufwendestangen und zwei Auslaufwendestangen

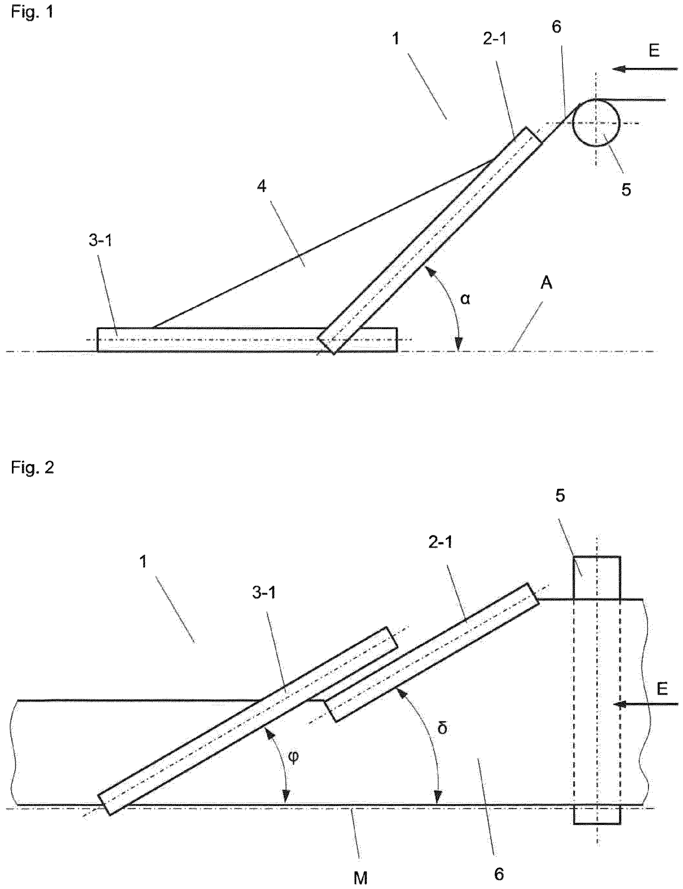

Fig. 1 zeigt eine Seitenansicht einer Einschlagvorrichtung 1, in welche von rechts eine Substratbahn 6 in einer Einlaufrichtung E der Einschlagvorrichtung 1 zugeführt wird. Die Substratbahn 6 wird hierbei über eine Einlaufwalze 5 geführt, um in einem definierten Winkel auf die erste Einlaufwendestange 2-1 geführt zu werden. Die Substratbahn 6 umschlingt mit dem einzuschlagenden Bereich der Substratbahn 6 die erste Einlaufwendestange 2-1 und wird aufgrund der Schrägstellung der ersten Einlaufwendestange 2-1 zur Einlaufrichtung E eingeschlagen.

Der mindestens eine eingeschlagene beziehungsweise der nach dem Passieren der ersten Einlaufwendestange 2-1 umgeschlagene Bereich der Substratbahn 6 wird nachfolgend als Einschlag 4 bezeichnet.

Stromabwärts der ersten Einlaufwendestange 2-1 ist eine erste Auslaufwendestange 3-1 angeordnet, wobei die erste Auslaufwendestange 3-1 eine Austrittsebene A der eingeschlagenen Substratbahn 6 aufspannt. Die erste Auslaufwendestange 3-1 ist gemäß Fig. 2 in einem Winkel ϕ zur Einlaufrichtung E der Substratbahn 6 geneigt.

Die eingeschlagene Substratbahn 6, das heißt der nicht eingeschlagene Bereich der Substratbahn 6 und der Einschlag 4 unterfahren die erste Auslaufwendestange 3-1, dass die eingeschlagene Seite der Substratbahn 6 und somit der Einschlag 4 der ersten Auslaufwendestange 3-1 zugewandt ist.

Wie aus Fig. 2 ersichtlich ist, ist für die Beschreibung der Einschlagvorrichtung 1 eine weitere Ebene, nämlich die Mittelebene M hilfreich. Diese Mittelebene M steht senkrecht auf der Austrittsebene A und ist parallel zur Einlaufrichtung E ausgerichtet.

Wie aus Fig. 1 entnommen werden kann, schließt die erste Einlaufwendestange 2-1 einen Winkel α in Projektion auf die Mittelebene M ein. Dieser Winkel α liegt in einem Bereich zwischen 15° und 60°, vorzugsweise in einem Bereich zwischen 20° und 45°, besonders bevorzugt in einem Bereich zwischen 30° und 45°.

Fig. 2 ist die Draufsicht der in Fig. 1 in Seitenansicht dargestellten Einschlagvorrichtung 1. Somit zeigt auch Fig. 2 die von rechts in der Einlaufrichtung E einlaufende Substratbahn 6, welche über die Einlaufwalze 5 geführt wird und auf die erste Einlaufwendestange 2-1 zuläuft.

Die erste Einlaufwendestange 2-1 schließt in Projektion auf die Austrittsebene A einen Winkel δ zur Mittelebene M ein. Dieser Winkel δ liegt in einem Bereich zwischen 15° und 50°, vorzugsweise in einem Bereich zwischen 20° und 45° und besonders bevorzugt in einem Bereich zwischen 25° und 35°.
Aufgrund der Schrägstellung der ersten Einlaufwendestange 2-1 zur Einlaufrichtung E wird somit der in Fig. 2 dargestellte obere Bereich der Substratbahn 6 als Einschlag 4 um die erste Einlaufwendestange 2-1 gelenkt und eingeschlagen.

Die erste Auslaufwendestange 3-1 schließt in Projektion auf die Austrittsebene A einen Winkel ϕ zur Mittelebene M ein. Dieser Winkel ϕ liegt in einem Bereich zwischen 15° und 50°, vorzugsweise in einem Bereich zwischen 20° und 45° und besonders bevorzugt in einem Bereich zwischen 25° und 35°. Der Winkel ϕ kann auch vorzugsweise derart eingestellt werden, dass dieser dem Winkel δ der ersten Einlaufwendestange 2-1 entspricht.

Der Abstand der ersten Auslaufwendestange 3-1 zur Projektion der ersten Einlaufwendestange 2-1 auf die Austrittsebene A in Erstreckung der Einlaufrichtung E kann grundsätzlich beliebig ausgestaltet werden. Es ist jedoch von Vorteil, wenn die erste Auslaufwendestange 3-1 einen möglichst geringen Abstand in Erstreckung der Einlaufrichtung E zur ersten Einlaufwendestange 2-1 aufweist. Hierbei ist jedoch auch das Förderverhalten und die Flexibilität der Substratbahn 6 zu beachten.

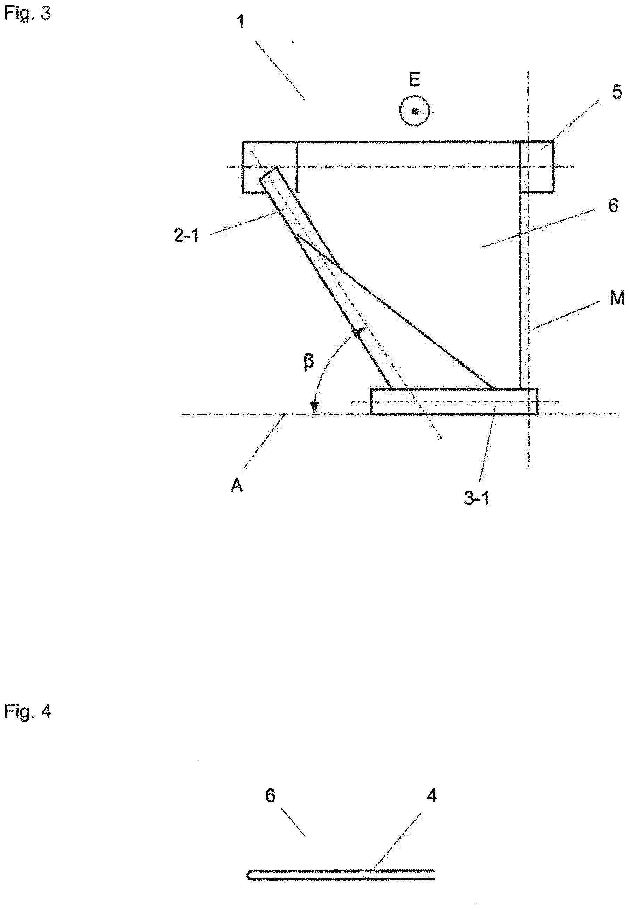

Fig. 3 ist die Vorderansicht der Einschlagvorrichtung 1, das heißt, es ist die Ansicht, wenn die Einschlagvorrichtung 1 gemäß den Figuren 1 oder 2 entgegen der Einlaufrichtung E betrachtet wird, was auch an der entsprechenden Angabe der Einlaufrichtung E in Fig. 3 zu entnehmen ist.

Fig. 3 zeigt somit wieder die Einlaufwalze 5, über welche die in Einlaufrichtung E einlaufende Substratbahn 6 vorteilhafterweise geführt wird, und zeigt auch, dass die Substratbahn 6 mit dem Einschlag 4 und somit mit dem einzuschlagenden Bereich der Substratbahn 6 zunächst über die erste Einlaufwendestange 2-1 geführt wird, wodurch der Einschlag 4 durch die erste Einlaufwendestange 2-1 entsprechend umgelenkt wird. Der Einschlag 4 wird nach der ersten Einlaufwendestange 2-1 durch die erste Auslaufwendestange 3-1, welche zusammen mit der Einlaufrichtung E die Austrittsebene A definiert, derart umgelenkt, dass die Substratbahn 6 auf der von der der ersten Einlaufwendestange 2-1 abgewandten Seite der ersten Auslaufwendestange 3-1 geführt wird. Bezogen auf die Fig. 3 bedeutet dies, dass die Substratbahn 6 auf der Unterseite der ersten Einlaufwendestange 2-1 geführt wird, so dass der Einschlag 4 der eingeschlagenen Substratbahn 6 der ersten Auslaufwendestange 3-1 zugewandt ist. In Fig. 3 ist ebenfalls ersichtlich, dass die Mittelebene M senkrecht zur Austrittsebene A angeordnet ist.

Ferner ist in Fig. 3 dargestellt, dass die erste Einlaufwendestange 2-1 in Projektion auf die Zeichenebene der Fig. 3, das heißt auf eine Ebene, welche senkrecht zur Austrittsebene A und senkrecht zur Mittelebene M steht, einen Winkel β einschließt. Dieser Winkel β liegt in einem Bereich zwischen 45° und 75°, vorzugsweise in einem Bereich zwischen 50° und 65°.

Sowohl die erste Einlaufwendestange 2-1 als auch die erste Auslaufwendestange 3-1 sind als aus dem Stand der Technik bekannte Wendestangen, welche auch unter dem Begriff Versatzstangen bekannt sind, ausgeführt. Dies bedeutet aufgrund der im Stand der Technik bekannten Vielfalt derartiger Wendestangen oder Versatzstangen, dass diese eine Oberfläche mit guten Gleiteigenschaften aufweisen, was dadurch erreicht werden kann, dass die Mantelfläche der Wendestangen eine sehr geringe Oberflächenrauhigkeit aufweisen, was beispielsweise durch Polieren der Mantelflächen erzielt werden kann. Es ist auch möglich, dass die Mantelflächen der ersten Einlaufwendestange 2-1 und/oder der ersten Auslaufwendestange 3-1 eine reibungsreduzierende Beschichtung aufweist. Darüber hinaus, das heißt zusätzlich oder optional ist es möglich, die erste Einlaufwendestange 2-1 und/oder die erste Auslaufwendestange 3-1 im Betrieb mit einem Luftpolster zu versehen, was üblicherweise dadurch erreicht wird, dass die Mantelfläche dieser Wendestangen kleine oder größere Austrittsöffnungen aufweist, aus denen Druckluft oder Blasluft austreten kann, so dass ein Luftpolster zwischen der jeweiligen Wendestange und der Substratbahn 6 erreicht wird. Derartige Austrittsöffnungen können beispielsweise durch Aufsprühen einer porösen Beschichtung eines mit Öffnungen wie Bohrungen oder Schlitzen versehenen Grundkörpers einer Wendestange oder durch das Anbringen von Bohrungen an der Mantelfläche einer Wendestange geschaffen werden.

Der Durchmesser der ersten Einlaufwendestange 2-1 und der erste Auslaufwendestange 3-1 ist in erster Linie abhängig von der Bahnbreite b der zu verarbeitenden Substratbahn 6 und von den erforderlichen Bahnspannungen, welche in der Regel abhängig vom Material der Substratbahn 6 sind. Die Durchmesser der hierfür eingesetzten Wendestangen liegen üblicherweise in einem Bereich von 25 mm bis 100 mm, vorzugsweise in einem Bereich von 40 mm bis 80 mm.

Das Ende der ersten Einlaufwendestange 2-1, welches der ersten Auslaufwendestange 3-1 zugewandt ist, kann hinsichtlich der Geometrie beispielsweise mit einem verkleinerten Radius ausgeführt werden, um eine geometrisch beziehungsweise maßlich definierte Ausgestaltung des Einschlages 4 sicherzustellen. Ferner ist es möglich, dieses Ende der ersten Einlaufwendestange 2-1 austauschbar zu gestalten, um einerseits die exakte Geometrie an das jeweilige Material der Substratbahn 6 anpassen zu können, und um andererseits einen einfachen Austausch dieses verschleißgefährdeten Endes im Falle von übermäßigem Verschleiß zu ermöglichen.

Fig. 4 zeigt einen Querschnitt der eingeschlagenen Substratbahn 6 stromabwärts der ersten Auslaufwendestange 3-1 in gleicher Blickrichtung der Fig. 3, das heißt Fig. 3 zeigt einen Querschnitt der eingeschlagenen Substratbahn 6 nach Durchlaufen der in den Figuren 1 bis 3 dargestellten Einschlagvorrichtung 1.

Wie aus Fig. 4 zu entnehmen ist, wurde die Substratbahn 6 in der Form eingeschlagen, dass die nicht umgeschlagene Substratbahn 6 und der eingeschlagene Teil der Substratbahn 6, welcher auch als Einschlag 4 bezeichnet wird, über einander liegen, so dass im Falle des Verbindens der offenen Seite ein geschlossener Schlauch gebildet wird.

Wenngleich in den Figuren 1 bis 3 nicht dargestellt, so ist es möglich, dass an der ersten Auslaufwendestange 3-1 oder im Bereich der ersten Auslaufwendestange 3-1 und/oder in Einlaufrichtung E der Substratbahn 6 betrachtet stromabwärts und/ oder stromaufwärts der ersten Auslaufwendestange 3-1 eine nicht dargestellte Fügeeinrichtung angeordnet ist. Diese Fügeeinrichtung kann beispielsweise als Verkettelungseinrichtung und/oder als Längsklebeeinrichtung und/oder als Schweißeinrichtung ausgestaltet sein, so dass damit das offene Ende des Einschlages 4 mit dem offenen Ende der nicht eingeschlagenen Substratbahn 6 verbunden stoffschlüssig und/oder formschlüssig verbunden werden kann, um einen geschlossenen Schlauch der Substratbahn 6 zu erhalten.

Zur verbesserten Führung der eingeschlagenen Substratbahn 6 oder zum verbesserten stoffschlüssigen und/oder formschlüssigen Fügen des offenen Endes der eingeschlagenen Substratbahn 6 kann in Erstreckung der Einlaufrichtung E betrachtet stromabwärts der ersten Auslaufwendestange 3-1 eine oder mehrere zeichnerisch in den Figuren 1 bis 3 nicht dargestellte Auslaufwalze angeordnet sein, die im Bedarfsfalle auch die auslaufende Substratbahn 6 oder den gefügten Bereich der Substratbahn 6 zusammenpressen können.

Eine Veränderung der Bahnbreite b der Substratbahn 6 und somit auch eine Veränderung der Breite der zu einem Schlauch eingeschlagenen Substratbahn 6 kann dadurch bewerkstelligt werden, indem entweder die Substratbahn 6 seitlich versetzt in die Einschlagvorrichtung 1 geführt wird, oder indem die erste Einlaufwendestange 2-1 in Erstreckung der Austrittsebene A verstellt wird, was bedeutet, dass in diesem Fall die erste Einlaufwendestange 2-1 in Erstreckung der Austrittsebene A und hierbei insbesondere in Erstreckung der Bahnbreite b verstellbar ausgeführt ist.

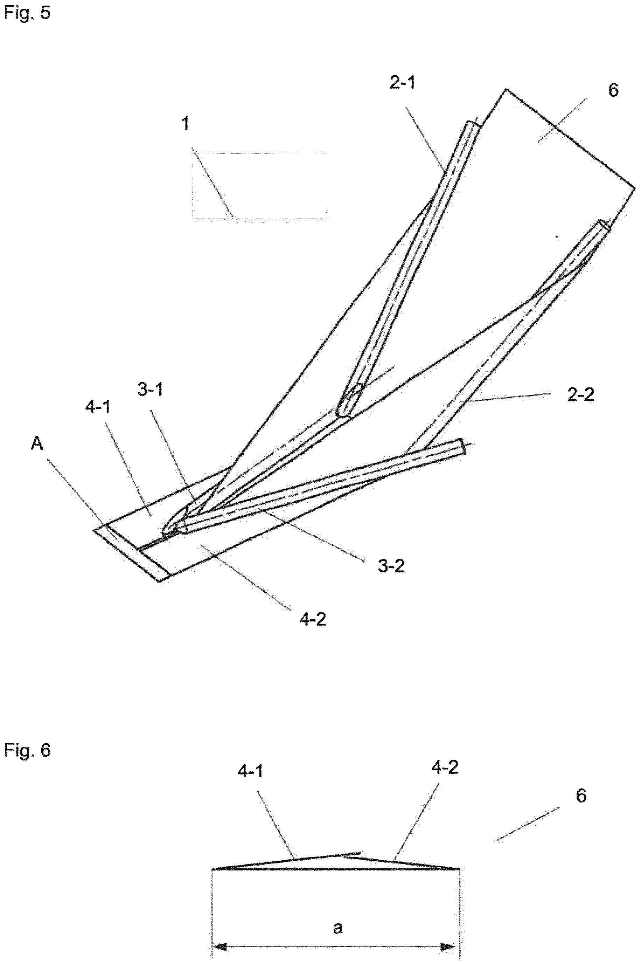

Fig. 5 zeigt eine Ausgestaltung der in den Figuren 1 bis 3 dargestellten Einschlagvorrichtung 1 in dreidimensionaler Ansicht.

Die in Fig. 5 dargestellte Einschlagvorrichtung 1 ist eine im Wesentlichen spiegelbildliche Erweiterung der in den Figuren 1 bis 3 dargestellten Einschlagvorrichtung 1. Diese Ausführung der Einschlagvorrichtung 1 umfasst neben der ersten Einlaufwendestange 2-1 eine im Wesentlichen spiegelbildlich zur Mittelebene M angeordnete zweite Einlaufwendestange 2-2 und eine im Wesentlichen spiegelbildlich zur ersten Auslaufwendestange 3-1 angeordnete zweite Auslaufwendestange 3-2. Mit einer derartigen Ausgestaltung ist es möglich, die Substratbahn 6 zweifach einzuschlagen und somit einen ersten Einschlag 4-1 und einen zweiten Einschlag 4-2 auszubilden.

Fig. 6 zeigt vergleichbar zu Fig. 4 einen Schnitt durch die eingeschlagene Substratbahn 6 in Blickrichtung der Laufrichtung der Substratbahn 6 als Fortsetzung der Einlaufrichtung E. Hierbei ist die eingeschlagene Substratbahn 6 mit einem nicht eingeschlagenen Teil der Substratbahn 6 und dem eingeschlagenen ersten Einschlag 4-1 und dem zweiten Einschlag 4-2 abgebildet, wobei der erste Einschlag 4-1 den zweiten Einschlag 4-2 überlappt. Diese Überlappung ist insbesondere für ein nachfolgendes Fügen dieser offenen Stelle hilfreich, da dadurch eine Fügestelle entsteht, welche nicht absteht, sofern der somit aus der Substratbahn 6 gebildete Schlauch eine beliebige Kontur annimmt, beispielsweise wenn ein Abschnitt eines derartigen Schlauches über einen zylindrischen oder beliebig geformten Körper wie beispielsweise ein Behältnis wie eine Flasche oder einen Becher gestülpt wird.

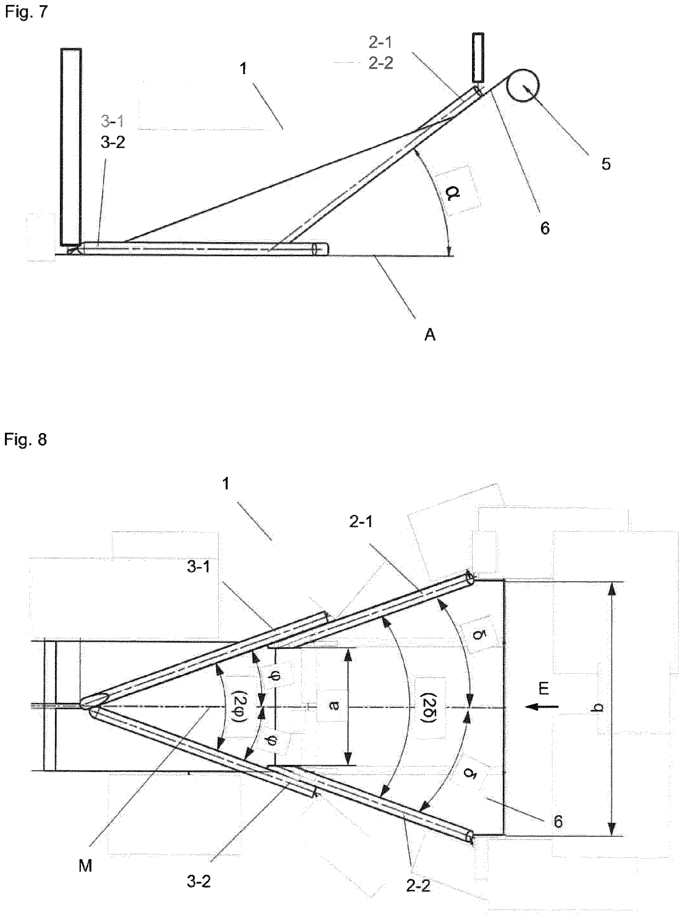

Fig. 7 zeigt vergleichbar zu Fig. 1 eine Seitenansicht der Einschlagvorrichtung 1, in welche von rechts eine Substratbahn 6 in einer Einlaufrichtung E der Einschlagvorrichtung 1 zugeführt wird. Die Substratbahn 6 wird hierbei über eine Einlaufwalze 5 geführt, um in einem definierten Winkel sowohl auf die erste Einlaufwendestange 2-1 als auch auf die zweite Einlaufwendestange 2-2 geführt zu werden. Die Substratbahn 6 umschlingt mit dem einzuschlagenden Bereich der Substratbahn 6 sowohl die erste Einlaufwendestange 2-1 als auch die zweite Einlaufwendestange 2-2 und wird aufgrund der Schrägstellung der ersten Einlaufwendestange 2-1 und der zweiten Einlaufwendestange 2-2 zur Einlaufrichtung E eingeschlagen.

Die beiden eingeschlagenen beziehungsweise der nach dem Passieren der ersten Einlaufwendestange 2-1 umgeschlagenen Bereiche der Substratbahn 6 werden nachfolgend als erster Einschlag 4-1 und zweiter Einschlag 4-2 bezeichnet.

Stromabwärts der ersten Einlaufwendestange 2-1 und der zweiten Einlaufwendestange 2-2 ist eine erste Auslaufwendestange 3-1 und eine zweite Auslaufwendestange 3-2 angeordnet, wobei die erste Auslaufwendestange 3-1 und die zweite Auslaufwendestange 3-2 eine Austrittsebene A der eingeschlagenen Substratbahn 6 aufspannen. Die erste Auslaufwendestange 3-1 ist gemäß Fig. 7 in einem Winkel ϕ zur Einlaufrichtung E der Substratbahn 6 geneigt, die zweite Auslaufwendestange 3-2 ist ebenfalls in einem Winkel ϕ zur Einlaufrichtung E geneigt, so dass zwischen der ersten Auslaufwendestange 3-1 und der zweiten Auslaufwendestange 3-2 ein Winkel 2ϕ aufgespannt ist.
Dieser Winkel ϕ liegt in einem Bereich zwischen 15° und 50°, vorzugsweise in einem Bereich zwischen 20° und 45° und besonders bevorzugt in einem Bereich zwischen 25° und 35°. Der Winkel ϕ kann auch vorzugsweise derart eingestellt werden, dass dieser dem Winkel δ der ersten Einlaufwendestange 2-1 entsprich

Die zweifach eingeschlagene Substratbahn 6, das heißt der nicht eingeschlagene Bereich der Substratbahn 6 und der erste Einschlag 4-1 und der zweite Einschlag 4-2 unterfahren die erste Auslaufwendestange 3-1 und die zweite Auslaufwendestange 3-2, dass die eingeschlagene Seite der Substratbahn 6 und somit der erste Einschlag 4-1 und der zweite Einschlag 4-2 der ersten Auslaufwendestange 3-1 und der zweiten Auslaufwendestange 3-2 zugewandt ist.

Wie aus Fig. 8 ersichtlich ist, ist für die Beschreibung der Einschlagvorrichtung 1 die Mittelebene M hilfreich. Diese Mittelebene M steht senkrecht auf der Austrittsebene A und ist parallel zur Einlaufrichtung E ausgerichtet und verläuft im Falle der Ausgestaltung der Einschlagvorrichtung 1 mit einer zweiten Einlaufwendestange 2-2 und einer zweiten Auslaufwendestange 3-2 vorzugsweise durch die Mitte der Substratbahn 6 und somit mittig durch die vorzugsweise im Wesentlichen symmetrisch aufgebaute Einschlagvorrichtung 1.

Die in den Figuren 5, 7, 8, 9 und 10 dargestellte Einschlagvorrichtung 1 kann grundsätzlich auch asymmetrisch ausgestaltet sein. Allerdings ist hierbei aufgrund der dann ebenfalls unsymmetrischen Verteilung von Reibungskräften und Umschlingungen die Gefahr eines seitlichen Verlaufens der Substratbahn 6, das heißt einem Verlaufen sowohl der noch nicht eingeschlagenen Substratbahn 6 als auch der eingeschlagenen Substratbahn 6 in Erstreckung der Bahnbreite b und/oder ein Einknicken der eingeschlagenen Substratbahn 6 zur nicht eingeschlagenen Substratbahn 6 zu berücksichtigen, was in Abhängigkeit des Materials der Substratbahn 6 zur Faltenbildung oder zu maßlichen Abweichungen der eingeschlagenen Substratbahn 6 führen kann.

Wie aus Fig. 7 entnommen werden kann, schließt neben der ersten Einlaufwendestange 2-1 auch die zweite Einlaufwendestange 2-2 einen Winkel α in Projektion auf die Mittelebene M ein. Dieser Winkel α liegt in einem Bereich zwischen 15° und 60°, vorzugsweise in einem Bereich zwischen 20° und 45°, besonders bevorzugt in einem Bereich zwischen 30° und 45°.

Wie aus Fig. 8 ersichtlich, schließen die erste Einlaufwendestange 2-1 als auch die zweite Einlaufwendestange 2-2 in Projektion auf die Austrittsebene A jeweils einen Winkel δ zur Mittelebene M ein. Dieser Winkel δ liegt in einem Bereich zwischen 15° und 50°, vorzugsweise in einem Bereich zwischen 20° und 45° und besonders bevorzugt in einem Bereich zwischen 25° und 35°. Somit schließt bei vorteilhafter symmetrischer Ausgestaltung der Einschlagvorrichtung 1 die erste Einlaufwendestange 2-1 in Projektion auf die Austrittsebene A zur zweiten Einlaufwendestange 2-2 einen Winkel von 2δ ein.

Aufgrund der Schrägstellung der ersten Einlaufwendestange 2-1 und der zweiten Einlaufwendestange 2-2 zur Einlaufrichtung E wird somit der in Fig. 8 dargestellte obere Bereich der Substratbahn 6 als erster Einschlag 4-1 um die erste Einlaufwendestange 2-1 gelenkt und eingeschlagen und der in Fig. 8 dargestellte untere Bereich der Substratbahn 6 als zweiter Einschlag 4-2 um die zweite Einlaufwendestange 2-2 gelenkt und eingeschlagen.

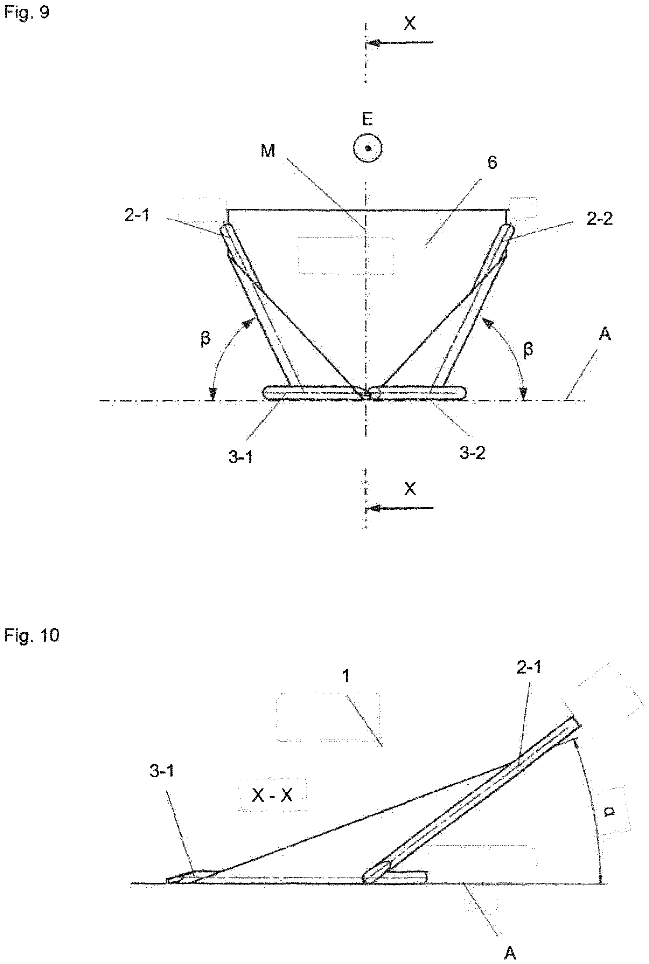

Fig. 9 ist die Vorderansicht der Einschlagvorrichtung 1, das heißt es ist die Ansicht, wenn die Einschlagvorrichtung 1 gemäß den Figuren 5, 7 oder 8 entgegen der Einlaufrichtung E betrachtet wird, was auch an der entsprechenden Angabe der Einlaufrichtung E in Fig. 9 zu entnehmen ist.

Fig. 9 zeigt, dass die Substratbahn 6 mit dem ersten Einschlag 4-1 über die erste Einlaufwendestange 2-1 geführt wird und dass parallel die Substratbahn 6 mit dem zweiten Einschlag 4-2 zunächst über die zweite Einlaufwendestange 2-2 geführt wird. Der erste Einschlag 4-1 wird durch die erste Einlaufwendestange 2-1 umgelenkt und der zweite Einschlag 4-2 wird durch die zweite Einlaufwendestange 2-2 entsprechend umgelenkt. Der erste Einschlag 4-1 wird nach der ersten Einlaufwendestange 2-1 durch die erste Auslaufwendestange 3-1, welche gemeinsam mit der zweiten Auslaufwendestange 3-2 die Austrittsebene A definiert, derart umgelenkt, dass die Substratbahn 6 auf der von der ersten Einlaufwendestange 2-1 abgewandten Seite der ersten Auslaufwendestange 3-1 geführt wird, und der zweite Einschlag 4-2 wird nach der zweiten Einlaufwendestange 2-2 durch die zweite Auslaufwendestange 3-2, welche gemeinsam mit der ersten Auslaufwendestange 3-1 die Austrittsebene A definiert, derart umgelenkt, dass die Substratbahn 6 auf der von der zweiten Einlaufwendestange 2-2 abgewandten Seite der zweiten Auslaufwendestange 3-2 geführt wird.

Bezogen auf die Fig. 9 bedeutet dies, dass die Substratbahn 6 auf der Unterseite der ersten Auslaufwendestange 3-1 und der zweiten Auslaufwendestange 3-1 geführt wird, so dass der erste Einschlag 4-1 und der zweite Einschlag 4-2 der eingeschlagenen Substratbahn 6 der ersten Auslaufwendestange 3-1 und der zweiten Auslaufwendestange 3-2 zugewandt ist.
In Fig. 9 ist ebenfalls ersichtlich, dass die Mittelebene M senkrecht zur Austrittsebene A angeordnet ist.

Ferner ist in Fig. 9 dargestellt, dass sowohl die erste Einlaufwendestange 2-1 als auch die zweite Einlaufwendestange 2-2 jeweils in Projektion auf die Zeichenebene der Fig. 9, das heißt auf eine Ebene, welche senkrecht zur Austrittsebene A und senkrecht zur Mittelebene M steht, einen Winkel β einschließen. Dieser Winkel β liegt in einem Bereich zwischen 45° und 75°, vorzugsweise in einem Bereich zwischen 50° und 65°.

Die zweite Einlaufwendestange 2-2 sowie die zweite Auslaufwendestange 3-2 können identisch zur ersten Einlaufwendestange 2-1 oder zur ersten Auslaufwendestange 3-1 hinsichtlich des Durchmessers oder hinsichtlich der Oberflächenbeschaffenheit der Mantelflächen, der optionalen Beschichtung und/oder der optionalen Bildung eines Luftfilmes zwischen der Substratbahn 6 und der jeweiligen Wendestange ausgestaltet sein, weshalb an dieser Stelle auf die oben angeführten Ausgestaltungen verwiesen wird.

Das Ende der zweiten Einlaufwendestange 2-2, welches der zweiten Auslaufwendestange 3-2 zugewandt ist, kann hinsichtlich der Geometrie identisch dem entsprechenden Ende der ersten Einlaufwendestange 2-1 gestaltet sein, das heißt, dass dieses Ende beispielsweise mit einem verkleinerten Radius ausgeführt werden kann, um eine geometrisch beziehungsweise maßlich definierte Ausgestaltung des Einschlages 4 sicherzustellen. Ferner ist es möglich, dieses Ende der zweiten Einlaufwendestange 2-2 analog zur ersten Einlaufwendestange 2-1 austauschbar zu gestalten, um einerseits die exakte Geometrie an das jeweilige Material der Substratbahn 6 anpassen zu können, und um andererseits einen einfachen Austausch dieses verschleißgefährdeten Endes im Falle von übermäßigem Verschleiß zu ermöglichen.

Wenngleich in den Figuren 5, 7, 8 und 9 nicht dargestellt, so ist es möglich, dass an der ersten Auslaufwendestange 3-1 oder an der zweiten Auslaufwendestange 3-2 oder im Bereich der ersten Auslaufwendestange 3-1 oder im Bereich der zweiten Auslaufwendestange 3-2 und/oder in Einlaufrichtung E der Substratbahn 6 betrachtet stromabwärts und/oder stromabwärts der ersten Auslaufwendestange 3-1 oder stromabwärts und/oder stromaufwärts der zweiten Auslaufwendestange 3-2 eine nicht dargestellte Fügeeinrichtung angeordnet ist.

Diese Fügeeinrichtung kann beispielsweise als Verkettelungseinrichtung und/oder als Längsklebeeinrichtung und/oder als Schweißeinrichtung ausgestaltet sein, so dass damit das offene Ende des ersten Einschlages 4-1 mit dem offenen Ende des zweiten Einschlages 4-2 stoffschlüssig und/oder formschlüssig verbunden werden kann, um einen geschlossenen Schlauch der Substratbahn 6 zu erhalten.

Zur verbesserten Führung der eingeschlagenen Substratbahn 6 oder zum verbesserten stoffschlüssigen und/oder formschlüssigen Fügen des offenen Endes der eingeschlagenen Substratbahn 6 kann in Erstreckung der Einlaufrichtung E betrachtet stromabwärts der ersten Auslaufwendestange 3-1 oder stromabwärts der zweiten Auslaufwendestange 3-2 eine oder mehrere zeichnerisch in den Figuren 5, 7 8 und 9 nicht dargestellte Auslaufwalze angeordnet sein.

Zur verbesserten Führung der eingeschlagenen Substratbahn 6 oder zum verbesserten stoffschlüssigen und/oder formschlüssigen Fügen des offenen Endes der eingeschlagenen Substratbahn 6 kann in Erstreckung der Einlaufrichtung E betrachtet stromabwärts der ersten Auslaufwendestange 3-1 oder stromabwärts der zweiten Auslaufwendestange 3-2 eine oder mehrere zeichnerisch in den Figuren 5 bis 9 nicht dargestellte Auslaufwalze angeordnet sein, die im Bedarfsfalle auch die auslaufende Substratbahn 6 oder den gefügten Bereich der Substratbahn 6 zusammenpressen können.

Eine Veränderung der Bahnbreite b der Substratbahn 6 und somit auch eine Veränderung der Breite der zu einem Schlauch eingeschlagenen Substratbahn 6 kann dadurch bewerkstelligt werden, indem entweder die Substratbahn 6 seitlich versetzt in die Einschlagvorrichtung 1 geführt wird, oder indem die erste Einlaufwendestange 2-1 und/oder die zweite Einlaufwendestange 2-2 in Erstreckung der Austrittsebene A verstellt wird, was bedeutet, dass in diesem Fall die erste Einlaufwendestange 2-1 und/oder die zweite Einlaufwendestange 2-2 in Erstreckung der Austrittsebene A und hierbei insbesondere in Erstreckung der Bahnbreite b verstellbar ausgeführt ist.

Hierbei kann es vorteilhaft sein, wenn mit der ersten Einlaufwendestange 2-1 und/ oder der zweiten Einlaufwendestange 2-2 auch die erste Auslaufwendestange 3-1 und/oder die zweite Auslaufwendestange 3-2 identisch zur jeweiligen ersten Einlaufwendestange 2-1 und/oder zur zweiten Einlaufwendestange 2-2 verstellt werden, um einen einheitlichen Abstand zwischen der jeweiligen Einlaufwendestange 2 und der jeweiligen Auslaufwendestange 3 beizubehalten.

Wie insbesondere aus der Fig. 8 ersichtlich ist, ist es insbesondere für Produktionen, bei denen der erste Einschlag 4-1 den zweiten Einschlag 4-2 überlappt oder bei denen der zweite Einschlag 4-2 den ersten Einschlag 4-1 überlappt, von Vorteil, wenn die Auslaufwendestange 3 der Seite, auf welcher der Einschlag 4 den gegenüberliegenden Einschlag 4 überlappt, die gegenüberliegende Auslaufwendestange 3 in Erstreckung der Bahnbreite b überragt.

Bezogen auf das in Fig. 6 dargestellte Beispiel, bei welchem der erste Einschlag 4-1 den zweiten Einschlag 4-2 überlappt, ist es von Vorteil, wenn die erste Auslaufwendestange 3-1 in Erstreckung der Bahnbreite b die Auslaufwendestange 3-2 überragt, wie dies beispielhaft in Fig. 5 oder in Fig. 8 dargestellt ist. Dadurch ist es möglich, dass der gesamte erste Einschlag 4-1 durch die erste Auslaufwendestange 3-1 geführt und gegen den nicht eingeschlagenen Teil der Substratbahn 6 gedrückt wird. Folglich ist es bei Produktionen mit sich überlappenden Einschlägen 4 von Vorteil, wenn die erste Auslaufwendestange 3-1 in Erstreckung der Bahnbreite b die zweite Auslaufwendestange 3-2 überragt, oder dass die zweite Auslaufwendestange 3-2 in Erstreckung der Bahnbreite b die erste Auslaufwendestange 3-1 überragt.

Fig. 10 ist eine Schnittdarstellung der Einschlagvorrichtung 1 wie in der Fig. 9 angegeben. Fig. 10 stellt somit einen Blick auf die erste Einlaufwendestange 2-1 und die teilweise durch die Substratbahn 6 verdeckte erste Auslaufwendestange 3-1 dar und veranschaulicht nochmals die Ausbildung des ersten Einschlages 4-1 durch Einschlagen eines Teiles der Substratbahn 6 durch die erste Einlaufwendestange 2-1 und das Unterführen der Substratbahn 6 unter der ersten Auslaufwendestange 3-1 zur Ausbildung des ersten Einschlages 4-1.

Wenngleich in den Figuren 1, 2, 3, 5 und 7 bis 10 aus Gründen der besseren Übersichtlichkeit der Anordnung der mindestens einen Einlaufwendestange 2 und der mindestens einen Auslaufwendestange 3 auf eine Darstellung der Befestigung der mindestens einen Einlaufwendestange 2 und der mindestens einen Auslaufwendestange 3 verzichtet wurde, so wird an dieser Stelle der Vollständigkeit halber erwähnt, dass eine jede Einlaufwendestange 2 oder Auslaufwendestange 3 entweder an einem nicht durch die Substratbahn 6 umschlungenen Ende mittels einer sogenannten fliegenden Lagerung an einem Gestell oder an einem Verstellmechanismus befestigt werden kann, oder dass die mindestens eine Einlaufwendestange 2 und/oder die mindestens eine Auslaufwendestange 3 an jeweils mindestens einer Stelle mit einem Gestell oder einem Verstellmechanismus befestigt wird, welche nicht von der Substratbahn 6 umschlungen werden.

### Bezugszeichenliste

- 1: Einschlagvorrichtung
- 2: Einlaufwendestange
- 3: Auslaufwendestange
- 4: Einschlag
- 5: Einlaufwalze
- 6: Substratbahn

- A: Austrittsebene
- M: Mittelebene
- E: Einlaufrichtung

- b: Bahnbreite
- a: Abstand

- α: Winkel
- β: Winkel
- δ: Winkel
- ϕ: Winkel

## Patentansprüche

1. Einschlagvorrichtung (1) zum mindestens einseitigen Einschlagen einer in einer Einlaufrichtung E einlaufenden Substratbahn (6) mit einer Bahnbreite b umfassend mindestens eine erste Einlaufwendestange (2-1) und mindestens eine erste Auslaufwendestange (3-1), **dadurch gekennzeichnet, dass** die erste Auslaufwendestange (3-1) eine Austrittsebene A der auslaufenden eingeschlagenen Substratbahn (6) beschreibt und einen Winkel ϕ zu einer Mittelebene M beschreibt, wobei die Mittelebene M senkrecht zur Austrittsebene A steht und parallel zur Einlaufrichtung E ausgerichtet ist, und wobei die erste Einlaufwendestange (2-1) in Projektion auf die Mittelebene M einen Winkel α zur Austrittsebene A einschließt, und wobei die erste Einlaufwendestange (2-1) senkrecht zu der Mittelebene M einen Winkel β zur Austrittsebene A einschließt, und wobei die erste Einlaufwendestange (2-1) in Projektion auf die Austrittsebene A einen Winkel δ zur Mittelebene M einschließt, und wobei die Substratbahn (6) mit dem einzuschlagenden Bereich über die erste Einlaufwendestange (2-1) führbar ist, und wobei die Substratbahn (6) derart an der ersten Auslaufwendestange (3-1) entlang leitbar ist, dass die eingeschlagene Seite der Substratbahn (6) der ersten Auslaufwendestange (3-1) zugewandt ist.

2. Einschlagvorrichtung (1) nach Anspruch 1, **dadurch gekennzeichnet, dass** die Einschlagvorrichtung (1) eine zweite Einlaufwendestange (2-2) und eine zweite Auslaufwendestange (3-2) umfasst, wobei die zweite Einlaufwendestange (2-2) spiegelbildlich gegenüber der Mittelebene M zur ersten Einlaufwendestange (2-1) angeordnet und von der ersten Einlaufwendestange (2-1) in einem Abstand a in Erstreckung der Bahnbreite b beabstandet ist,
und wobei die zweite Auslaufwendestange (3-2) im Wesentlichen spiegelbildlich gegenüber der Mittelebene M zur ersten Auslaufwendestange (3-1) angeordnet ist.

3. Einschlagvorrichtung (1) nach einem der Ansprüche 1 oder 2, **dadurch gekennzeichnet, dass** die erste Einlaufwendestange (2-1) und/oder die zweite Einlaufwendestange (2-2) in Erstreckung der Austrittsebene A verstellbar ist.

4. Einschlagvorrichtung (1) nach Anspruch 3, **dadurch gekennzeichnet, dass** die Verstellung der ersten Einlaufwendestange (2-1) und/oder der zweiten Einlaufwendestange (2-2) in Erstreckung der Bahnbreite b zur Veränderung des Abstandes a erfolgt.

5. Einschlagvorrichtung (1) nach einem der Ansprüche 2 bis 4, **dadurch gekennzeichnet, dass** die erste Auslaufwendestange (3-1) in Erstreckung der Bahnbreite b die zweite Auslaufwendestange (3-2) überragt, oder dass die zweite Auslaufwendestange (3-2) in Erstreckung der Bahnbreite b die erste Auslaufwendestange (3-1) überragt.

6. Einschlagvorrichtung (1) nach einem der Ansprüche 1 bis 5, **dadurch gekennzeichnet, dass** die Einschlagvorrichtung (1) in Einlaufrichtung E der Substratbahn (6) betrachtet stromaufwärts der ersten Einlaufwendestange (2-1) eine Einlaufwalze (5) angeordnet ist.

7. Einschlagvorrichtung (1) nach einem der Ansprüche 1 bis 6, **dadurch gekennzeichnet, dass** an der ersten Auslaufwendestange (3-1) oder an der zweiten Auslaufwendestange (3-2) und/oder stromabwärts und/oder stromaufwärts der ersten Auslaufwendestange (3-1) und/oder stromabwärts und/oder stromaufwärts der zweiten Auslaufwendestange (3-2) eine Fügeeinrichtung angeordnet ist.

8. Einschlagvorrichtung (1) nach Anspruch 7, **dadurch gekennzeichnet, dass** die Fügeeinrichtung als Längsklebeeinrichtung oder als Schweißeinrichtung oder als Verkettelungseinrichtung ausgeführt ist.

9. Einschlagvorrichtung (1) nach einem der Ansprüche 1 bis 8, **dadurch gekennzeichnet, dass** der Winkel α in einem Bereich zwischen 15° und 60°, vorzugsweise in einem Bereich zwischen 20° und 45° liegt.

10. Einschlagvorrichtung (1) nach einem der Ansprüche 1 bis 9, **dadurch gekennzeichnet, dass** der Winkel β in einem Bereich zwischen 45° und 75°, vorzugsweise in einem Bereich zwischen 50° und 65° liegt.

11. Einschlagvorrichtung (1) nach einem der Ansprüche 1 bis 10, **dadurch gekennzeichnet, dass** der Winkel δ in einem Bereich zwischen 15° und 50°, vorzugsweise in einem Bereich zwischen 25° und 35° liegt.

12. Einschlagvorrichtung (1) nach einem der Ansprüche 1 bis 11, **dadurch gekennzeichnet, dass** der Winkel ϕ in einem Bereich zwischen 15° und 50°, vorzugsweise in einem Bereich zwischen 25° und 35° liegt.
